# EUROPEAN PATENT APPLICATION

(11) **EP 2 944 414 A1**
(43) Date of publication of application: **18.11.2015**
(21) Application number: 13870900.1
(22) Date of filing: 08.11.2013
(51) Int. Cl.: B23K 26/046, B23K 26/00, B23K 26/02

(54) **THREE-DIMENSIONAL LASER PROCESSING MACHINE**

(30) Priority: 10.01.2013 JP 2013002328
(71) Applicant: Mitsubishi Heavy Industries, Ltd., Tokyo 108-8215 (JP)
(72) Inventor: YAMASHITA, Tsugumaru, Tokyo 108-8215 (JP); FUJITA, Yoshihito, Tokyo 108-8215 (JP); GOYA, Saneyuki, Tokyo 108-8215 (JP); SHIBATA, Ryota, Tokyo 108-8215 (JP); SUZUKI, Ryu, Tokyo 108-8215 (JP); YAMASAKI, Makoto, Tokyo 108-8215 (JP)
(74) Representative: Henkel, Breuer & Partner
(86) International application number: PCT/JP2013/080208
(87) International publication number: WO 2014/109120

(57) **Abstract**

A three-dimensional laser processing machine performs high-precision laser processing on a workpiece (W) by setting the focal position of laser light to be condensed by a condensing lens at a predetermined distance from a portion to be processed of the workpiece (W), is provided with a three-dimensional shape measuring instrument (50) for measuring the three-dimensional shape of the workpiece (W), and sets the focal position of the laser light at the predetermined distance from the portion to be processed on the basis of three-dimensional shape data relating to the workpiece (W) measured by the three-dimensional shape measuring instrument (50).

## Description

### [Technical Field]

The present invention relates to a three-dimensional laser processing machine.

### [Background Art]

In recent years, adoption of high tensile strength steels (high tensile materials) is increasing and the high tensile materials are used in various fields. For example, in the automotive industry, there are demands for reducing weight of body parts to improve fuel efficiency of automobiles and at the same time maintaining or improving the safety of the body parts which are reduced in weight. High tensile materials are adopted as materials for achieving light weight and high strength of body parts.

The body parts and the like using the high tensile materials have far higher stiffness than conventional parts using soft iron, and processing of cutting and boring such body parts is difficult to perform by a conventional pressing method. Accordingly, the parts using the high tensile materials are sometimes cut and bored by a method using laser light instead of the pressing method.

Processing using the laser light is performed by a three-dimensional laser processing machine <see, for example, Patent Literature 1 and Patent Literature 2>. The laser processing is processing in which a workpiece being a processing object is cut and bored by irradiating a processing portion of the workpiece with the laser light to melt the material of the processing portion and blowing away the melted material with gas or the like.

The three-dimensional laser processing machine includes a condenser lens to improve processing accuracy and the like of the laser processing and emits the laser light through the condenser lens. The laser light is condensed on the processing portion of the workpiece or near the processing portion by the condenser lens, and this can reduce an irradiation area to be irradiated with the laser light in the processing portion. A portion melted by the laser light is thus small, and cutting and boring of fine shapes and small regions can be performed. Hence, highly-accurate processing can be performed.

In other words, the irradiation area of the laser light in the processing portion affects the processing accuracy of the laser processing. Factors determining the irradiation area of the laser light include a distance between the processing portion of the workpiece and a focal position where the laser light is condensed. Accordingly, it is important to grasp this distance and set the processing portion and the focal position at a predetermined distance from each other in the laser processing.

In view of this, the conventional three-dimensional laser processing machine includes a distance detector (gap sensor) such as a capacitive sensor or a laser displacement meter near the laser light emitting portion. The gap sensor measures the distance (gap) to the processing portion of the workpiece, and the three-dimensional laser processing machine calculates the distance between the focal position of the emitted laser light and the processing portion of the workpiece from the gap measurement value and checks whether the calculation result is within a tolerance of a processing setting value in the laser processing.

When the calculation result of the gap sensor is within the tolerance of the processing setting value, the laser light is emitted from a laser light emitting portion and processing of cutting or boring is performed. When the calculation result of the gap sensor is outside the tolerance of the processing setting value, a laser head including the laser light emitting portion is moved. Then, the gap measurement by the gap sensor, the calculation of the distance between the focal position of the laser light and the processing portion of the workpiece, and the checking of the calculation result is performed again. After the laser head is set such that the calculation result of the gap sensor is within the tolerance of the processing setting value, the laser processing is performed on the processing portion of the workpiece.

A series of operations from the gap measurement to the laser processing as described above is performed for one processing portion. In laser processing of a workpiece having multiple processing portions, the aforementioned series of operations is performed for each of the processing portions in the workpiece.

### [Citation List]

### [Patent Literatures]

[Patent Literature 1] Japanese Patent Application Publication No. 2010-17745
[Patent Literature 2] Japanese Patent Application Publication No. Sho 61-27192

### [Summary of Invention]

### [Technical Problem]

However, the conventional three-dimensional laser processing machine does not perform the processing of cutting and boring with the laser light while performing the gap measurement with the gap sensor, the calculation of the distance between the focal position of the laser light and the processing portion of the workpiece, and the checking of the calculation result. This prevents an improvement of the processing efficiency of the three-dimensional laser processing machine.

As a matter of course, if the laser processing is performed without measuring the distance between the focal position of the laser light and the processing portion of the workpiece to improve the processing efficiency of the three-dimensional laser processing machine, the distance cannot be set to the predetermined processing setting value and the processing accuracy of the laser processing decreases.

The present invention has been made in view of the problem described above, and an object thereof is to improve processing efficiency of laser processing in a three-dimensional laser processing machine.

### [Solution to Problem]

A three-dimensional laser processing machine according to a first aspect of the present invention for solving the aforementioned problem provides a three-dimensional laser processing machine which performs highly-accurate laser processing on a processing portion of a processing object by setting a focal position of laser light condensed by a condenser lens at a predetermined distance from the processing portion, the three-dimensional laser processing machine comprising a three-dimensional shape measurement device configured to measure a three-dimensional shape of the processing object, wherein
the focal position of the laser light is set at the predetermined distance from the processing portion, on the basis of three-dimensional shape data of the processing object measured by the three-dimensional shape measurement device.

A three-dimensional laser processing machine according to a second aspect of the present invention for solving the aforementioned problem provides the three-dimensional laser processing machine according to the first aspect, wherein the three-dimensional shape measurement device is installed in a setup space for the processing object, and
the three-dimensional shape of the processing object setup in the setup space is measured before the processing object is subjected to the laser processing.

A three-dimensional laser processing machine according to a third aspect of the present invention for solving the aforementioned problem provides the three-dimensional laser processing machine according to the first or the second aspect, wherein the three-dimensional shape of the processing object subjected to the laser processing is measured by the three-dimensional shape measurement device, and
processing accuracy of the laser processing is checked by using the three-dimensional shape data of the processing object subjected to the laser processing.

### [Advantageous Effects of Invention]

The three-dimensional laser processing machine of the first aspect of the present invention comprises the three-dimensional shape measurement device configured to measure the three-dimensional shape of the processing object, and can thereby accurately grasp the shape of the processing object and the position of the processing portion. Accordingly, there is no need to detect a gap for each of the processing portions by using a gap sensor or the like or to perform similar operations. Hence, it is possible to eliminate gap detection time by the gap sensor and the like and improve the processing efficiency of the laser processing by the three-dimensional laser processing machine. Moreover, since the distance between the focal position of the laser light and the processing portion is set based on the three-dimensional shape data of the processing object measured by the three-dimensional shape measurement device, the laser processing can be performed with the actual irradiation area of the laser light in the processing portion being the same as the set irradiation area, and the processing accuracy of the laser processing does not decrease.

In the three-dimensional laser processing machine of the second aspect of the present invention, the three-dimensional shape measurement device is installed in the setup space for the processing object, and there is thus no need to secure an additional space for the three-dimensional shape measurement. Moreover, the three-dimensional shape of the processing object setup in the setup space is measured before the processing object is subjected to the laser processing. Due to this, the three-dimensional shape of the processing object can be measured while another processing object is subjected to the laser processing.

The three-dimensional laser processing machine of the third aspect of the present invention can check whether the laser processing is performed on the processing object as set, i.e. check the processing accuracy of the laser processing by the three-dimensional laser processing machine by measuring the three-dimensional shape of the processing object with the three-dimensional shape measurement device after the laser processing. The three-dimensional laser processing machine can thereby detect a processing error and the like which occur in the laser processing, and incorporate data of the detected processing error and the like into processing data of the next processing object to perform the laser processing with the processing error and the like corrected for each of the processing objects.

### [Brief Description of Drawings]

[Fig. 1] Fig. 1 is a schematic perspective view illustrating a three-dimensional laser processing machine of Embodiment 1.
[Fig. 2] Fig. 2 is a schematic perspective view illustrating a scanning device in the three-dimensional laser processing machine of Embodiment 1.
[Fig. 3] Fig. 3 is an explanatory view illustrating a workpiece changing operation of a workpiece changing device in the three-dimensional laser processing machine of Embodiment 1.
[Fig. 4] Fig. 4 is an explanatory view illustrating the workpiece changing operation of the workpiece changing device in the three-dimensional laser processing machine of Embodiment 1.
[Fig. 5] Fig. 5 is an explanatory view illustrating the workpiece changing operation of the workpiece changing device in the three-dimensional laser processing machine of Embodiment 1.
[Fig. 6] Fig. 6 is an explanatory view illustrating the workpiece changing operation of the workpiece changing device in the three-dimensional laser processing machine of Embodiment 1.

### [Description of Embodiment]

An embodiment of a three-dimensional laser processing machine of the present invention is described below in detail with reference to the attached drawings. As a matter of course, the present invention is not limited by the following embodiment and various changes can be made within a scope not departing from the spirit of the present invention.

### [Embodiment 1]

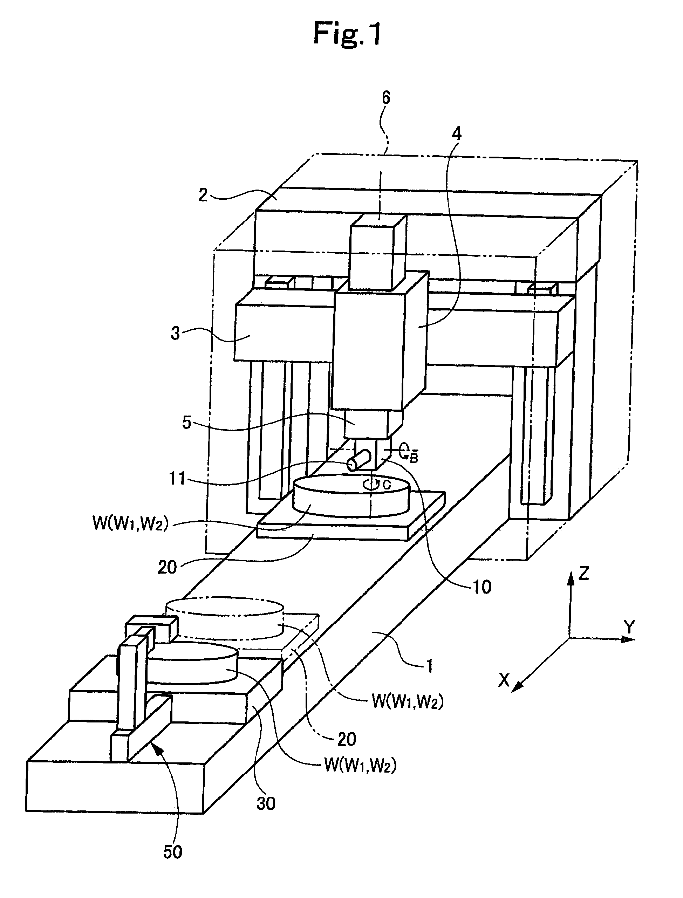

First, a structure of the three-dimensional laser processing machine in Embodiment 1 of the present invention is described with reference to Figs. 1 to 6.

As illustrated in Fig. 1, the three-dimensional laser processing machine of the embodiment includes a bed 1 horizontally installed on a floor surface, a gate-shaped column 2 installed to straddle the bed 1, a cross rail 3 supported on a front surface of the column 2 and configured to be movable in Z-axis directions (vertical directions) relative to the column 2, a saddle 4 supported on the cross rail 3 and configured to be movable in Y-axis directions (horizontal directions) along the cross rail 3, and a ram 5 held by the saddle 4 and configured to be movable in the Z-axis directions relative to the saddle 4.

The ram 5 is provided with a laser head 10 configured to be movable in the Z-axis directions and turnable in C-axis directions (directions of rotation about an axis parallel to the Z-axis) relative to the ram 5. The laser head 10 includes a laser light emitting portion 11 configured to be turnable in B-axis directions (directions of rotation about an axis parallel to the Y-axis) relative to the laser head 10.

Laser light emitted from the laser light emitting portion 11 is condensed on a not-illustrated processing portion in a workpiece W which is a processing object or near the processing portion by a not-illustrated condenser lens incorporated in the laser head 10. Accurate processing of cutting and boring of the workpiece W is performed as follows. The not-illustrated processing portion of the workpiece W is heated by being irradiated with the condensed laser light and is locally melted, and the melted material of the processing portion is blown away by gas jetted from a not-illustrated gas jetting portion included in the laser head 10.

Note that the three-dimensional laser processing machine includes a safety cover 6 for securing safety of a worker and the like and an area where the laser processing is performed is defined by the safety cover 6. In Fig. 1, the safety cover 6 is illustrated by two-dot chain lines for clarity of the drawing.

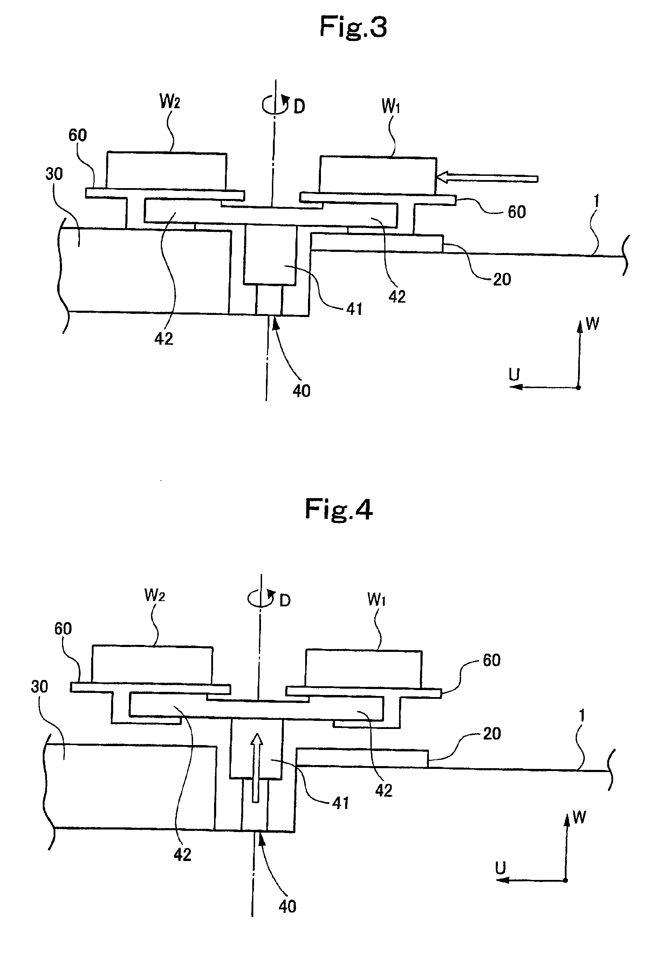

The bed 1 includes a processing table 20 for processing of the workpiece W, a setup plate 30 for setup of the workpiece W, and a workpiece changing device 40 (see Figs. 3 to 6). In Fig. 1, illustration of the workpiece changing device 40 is omitted.

The processing table 20 is installed on the bed 1 to be movable between a processing position (a solid line portion in Fig. 1) and a setup position (a two-dot chain line portion in Fig. 1). The setup plate 30 is installed on one end side of the bed 1 to be adjacent to the processing table 20 at the setup position, and the workpiece changing device 40 is installed between the processing table 20 at the setup position and the setup plate 30 (see Figs. 3 to 6).

As illustrated in Figs. 3 to 6, the workpiece changing device 40 has a main body portion 41 and workpiece holding portions 42 and also includes a not-illustrated lifting-lowering mechanism configured to lift and lower the main body portion 41 and the workpiece holding portions 42 in W-axis directions (axial directions parallel to the Z-axis) and a not-illustrated rotating mechanism configured to rotate the main body portion 41 and the workpiece holding portions 42 in D-axis directions (directions of rotation about an axis parallel to the W-axis).

The workpiece changing device 40 can perform work of changing a processed workpiece W₁ on the processing table 20 which has been subjected to the laser processing and moved to the setup position, for a to-be-processed workpiece W₂ on the setup plate 30 which is newly loaded onto the three-dimensional laser processing machine to be subjected to the laser processing. The work of changing the processed workpiece W₁ for the to-be-processed workpiece W₂ which is performed by the workpiece changing device 40 will be described later.

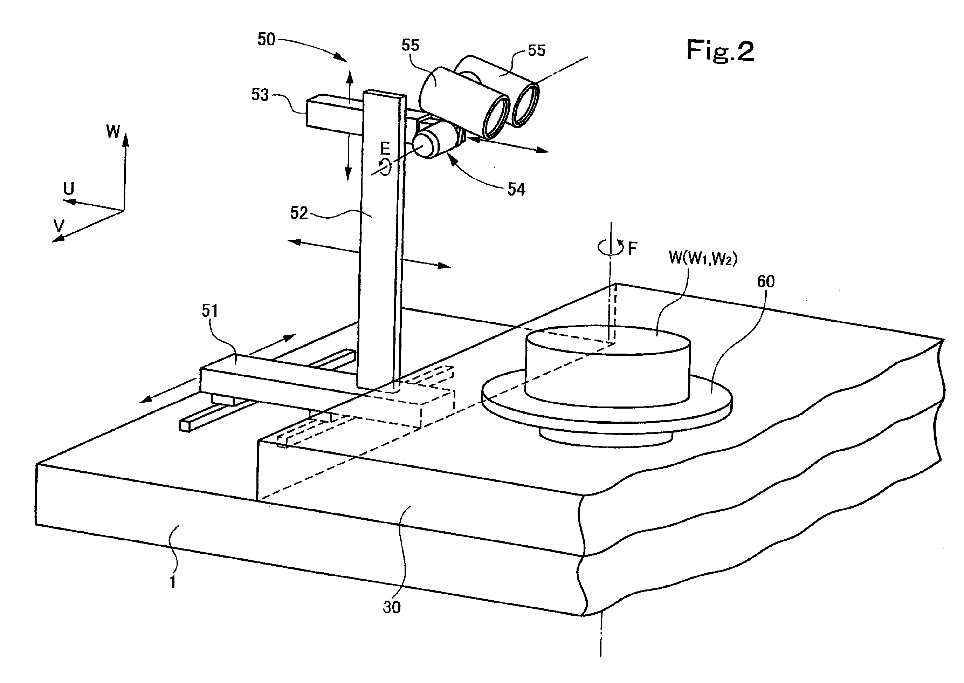

In the embodiment, as illustrated in Fig. 1, the bed 1 in the three-dimensional laser processing machine includes a scanning device 50 which is a three-dimensional shape measurement device for measuring the three-dimensional shape of the workpiece W before and after the processing. The scanning device 50 is installed in a set-up space for the workpiece W at the one end side of the bed 1 and, as illustrated in Fig. 2, includes a base portion 51 configured to be slidable in V-axis directions (axial directions parallel to the Y-axis) relative to the bed 1, a body portion 52 supported on the base portion 51 and configured to be slidable in U-axis directions (axial directions parallel to the X-axis) relative to the base portion 51, an arm portion 53 supported on the body portion 52 and configured to be slidable in the W-axis directions relative to the body portion 52, and a neck portion 54 supported on one end side of the arm portion 53 and configured to be slidable in the U-axis directions and turnable in E-axis directions (directions of rotation about an axis parallel to the V-axis).

The neck portion 54 has two cameras 55 for measuring the three-dimensional shape of the workpiece W. Note that the setup plate 30 is provided with a not-illustrated rotating mechanism which can rotate the workpiece W placed on the setup plate 30 in F-axis directions (directions of rotation about an axis parallel to the Z-axis and the W-axis) so that the shape of the entire workpiece W can be measured by the scanning device 50 before and after the processing.

In other words, the three-dimensional shapes of workpieces W of various sizes and shapes can be measured by the sliding of the base portion 51 in the V-axis directions, the sliding of the body portion 52 in the U-axis directions, the sliding of the arm portion 53 in the W-axis directions, the sliding of the neck portion 54 in the U-axis directions, and the turning of the neck portion 54 in the E-axis directions in the scanning device 50 as well as the rotating operation of the workpiece W on the setup plate 30 in the F-axis directions.

Note that loading and unloading of the workpiece W in the three-dimensional laser processing machine is performed in the setup plate 30. Moreover, the workpiece W is placed on the setup plate 30 with a workpiece placing jig 60 therebetween, rotated on the setup plate 30 together with the workpiece placing jig 60, and changed for another workpiece W together with the workpiece placing jig 60 by the workpiece changing device 40 (see Figs. 3 to 6).

Next, a flow of laser processing by the three-dimensional laser processing machine in Embodiment 1 of the present invention is described with reference to Figs. 1 to 6.

First, while the workpiece W₁ is being subjected to the laser processing on the processing table 20 at the processing position, the workpiece W₂ to be processed is placed on the setup plate 30 in the three-dimensional laser processing machine with the workpiece placing jig 60 therebetween, by a not-illustrated crane or manual work of a worker, and the scanning device 50 performs the three-dimensional shape measurement of the workpiece W₂ to be processed (see Figs. 1 and 2).

An image capturing position and an image capturing direction of the cameras 55 are adjusted by sliding and turning the base portion 51, the body portion 52, the arm portion 53, and the neck portion 54 of the scanning device 50 installed near the setup plate 30, and the scanning device 50 is thereby setup to be suitable for the three-dimensional shape measurement of the workpiece W₂ to be processed which is placed on the setup plate 30.

On the setup plate 30, the workpiece placing jig 60 and the workpiece W₂ to be processed are rotated in the F-axis direction by the not-illustrated rotating mechanism and the three-dimensional shape measurement of the workpiece W₂ to be processed is performed by the scanning device 50. Three-dimensional shape data d₂ of the workpiece W₂ to be processed which is measured by the scanning device 50 is transmitted to a not-illustrated data processing portion and is used for later-described laser processing of the workpiece W₂ to be processed.

Note that, in the embodiment, the workpiece W₂ to be processed is loaded onto the three-dimensional laser processing machine and is subjected to the three-dimensional shape measurement by the scanning device 50 while the workpiece W₁ already loaded onto the three-dimensional laser processing machine is subjected to the laser processing, and the laser processing of the workpiece W₁ and the three-dimensional shape measurement of the workpiece W₂ to be processed is thereby performed in parallel. Accordingly, processing efficiency of the laser processing by the three-dimensional laser processing machine can be improved.

Next, the workpiece changing device 40 performs work of changing the processed workpiece W₁ for the workpiece W₂ to be processed (see Fig. 1 and Figs. 3 to 6).

The processed workpiece W₁ placed on the processing table 20 is moved to the setup position after being subjected to the laser processing at the processing position (see Fig. 1).

Then, as illustrated in Fig. 3, one holding portion 42 (one on the right side in Fig. 3) of the workpiece changing device 40 holds the workpiece placing jig 60 to which the processed workpiece W₁ is fixed, on the processing table 20 having moved to the setup position, while another holding portion 42 (one on the left side in Fig. 3) holds the workpiece placing jig 60 to which the workpiece W₂ to be processed is fixed, on the setup plate 30.

Next, as illustrated in Fig. 4, the main body portion 41 is lifted in the W-axis direction by the not-illustrated lifting-lowering mechanism in the workpiece changing device 40, and the holding portions 42, the workpiece placing jigs 60 which are held by the holding portions 42, and the processed workpiece W₁ and the workpiece W₂ to be processed which are fixed onto the workpiece placing jigs 60 are also lifted.

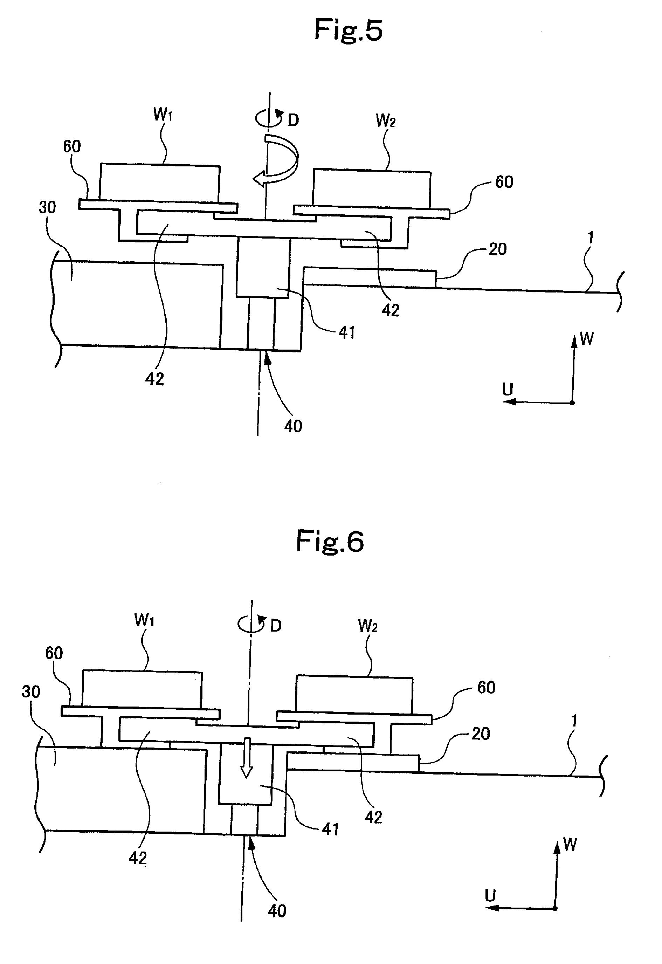

Then, as illustrated in Fig. 5, the main body portion 41 is rotated in the D-axis direction by the not-illustrated rotating mechanism in the workpiece changing device 40, and the holding portions 42, the workpiece placing jigs 60 which are held by the holding portions 42, and the processed workpiece W₁ and the workpiece W₂ to be processed which are fixed onto the workpiece placing jigs 60 are also rotated. The processed workpiece W₁ is thereby disposed above the setup plate 30 and the workpiece W₂ to be processed is disposed above the processing table 20.

Next, as illustrated in Fig. 6, the main body portion 41 is lowered in the W-axis direction by the not-illustrated lifting-lowering mechanism in the workpiece changing device 40, and the holding portions 42, the workpiece placing jigs 60 which are held by the holding portions 42, and the processed workpiece W₁ and the workpiece W₂ to be processed which are fixed onto the workpiece placing jigs 60 are also lowered.

The not-illustrated lifting-lowering mechanism lowering the main body portion 41 in the W-axis direction causes the workpiece placing jig 60 and the processed workpiece W₁ which is fixed onto the workpiece placing jig 60 to be placed on the setup plate 30 and causes the workpiece placing jig 60 and the workpiece W₂ to be processed which is fixed onto the workpiece placing jig 60 to be placed on the processing table 20. The work of changing the processed workpiece W₁ for the workpiece W₂ to be processed is thereby completed.

Next, the scanning device 50 performs the three-dimensional shape measurement of the processed workpiece W₁, and the workpiece W₂ to be processed is subjected to the laser processing (see Figs. 1 and 2).

As in the aforementioned three-dimensional shape measurement of the workpiece W₂ to be processed, the image capturing position and the image capturing direction of the cameras 55 are adjusted, and the scanning device 50 performs the three-dimensional shape measurement of the processed workpiece W₁ placed on the setup plate 30 (see Fig. 2). Three-dimensional shape data d₁ of the processed workpiece W₁ which is measured by the scanning device 50 is transmitted to the not-illustrated data processing portion and is used for the later-described laser processing of the workpiece W₂ to be processed, together with the three-dimensional shape data d₂ of the workpiece W₂ to be processed.

Note that since the three-dimensional laser processing machine in the embodiment performs only boring on the workpiece W, there is no great difference between the shape of the processed workpiece W₁ and the shape of the workpiece W₂ to be processed. Accordingly, the adjustment of the image capturing position and the image capturing direction of the cameras 55 are omitted. As a matter of course, in cases such as where the three-dimensional laser processing machine performs laser processing such as cutting on the workpiece W and the there is great difference between the shape of the workpiece W₂ to be processed and the shape of the processed workpiece W₁, the image capturing position and the image capturing direction of the cameras 55 can be readjusted.

The processed workpiece W₁ which has been subjected to the three-dimensional shape measurement by the scanning device 50 is removed from the setup plate 30 by the not-illustrated crane or the manual work of the worker, and a new workpiece W₃ (not illustrated) is placed on the setup plate 30 with the workpiece placing jig 60 therebetween, by the not-illustrated crane or the manual work of the worker.

Meanwhile, the workpiece placing jig 60 and the workpiece W₂ to be processed which are placed on the processing table 20 are disposed at the processing position by moving the processing table 20 from the setup position to the processing position (see Fig. 1). The workpiece W₂ to be processed which is placed on the processing table 20 with the workpiece placing jig 60 therebetween is subjected to laser processing at the processing position.

In this case, processing data D₂ used for the laser processing of the workpiece W₂ to be processed is data incorporating the aforementioned three-dimensional shape data d₂ of the workpiece W₂ to be processed and the three-dimensional shape data d₁ of the processed workpiece W₁.

Specifically, on the basis of the three-dimensional shape data d₂ of the workpiece W₂ to be processed, the three-dimensional laser processing machine reflects slight difference in shape among the workpieces W and the position of the workpiece W₂ relative to the workpiece placing jig 60, and corrects the position and the laser light emitting direction of the laser light emitting portion 11 for the laser processing of the not-illustrated processing portion of the workpiece W₂. The three-dimensional laser processing machine can thereby accurately grasp the distance between the focal position of the emitted laser light and the processing portion of the workpiece W₂, and set the focal position and the processing portion at a predetermined distance from each other.

Moreover, the three-dimensional laser processing machine compares the aforementioned three-dimensional shape data d₁ of the processed workpiece W₁ and the processing data D₁ of the laser processing performed on the workpiece W₁, and checks whether the laser processing is performed on the workpiece W₁ as indicated in the processing data D₁, i.e. checks the processing accuracy of the laser processing by the three-dimensional laser processing machine. The three-dimensional laser processing machine can thereby detect a processing error and the like occurring in the laser processing and perform laser processing in which the processing error and the like is corrected on the workpiece W₂ by incorporating the data of the processing error and the like into the processing data D₂ of the workpiece W₂.

Accordingly, there is no need to measure the distance between the processing portion and the laser light irradiation portion for each of processing portions by using a gap sensor or the like as in the conventional three-dimensional laser processing machine, and the time for gap detection by the gap sensor can be eliminated. The processing efficiency of laser processing by the three-dimensional laser processing machine can be thereby improved.

As a matter of course, timings of performing the three-dimensional shape measurement of the workpiece W₁ and the laser processing of the workpiece W₂ and a timing of incorporating the three-dimensional shape data d₁ of the processed workpiece W₁ into the processing data in the present invention are not limited to those in the embodiment. For example, the timings may be as follows. The three-dimensional shape of the processed workpiece W₁ is measured while the workpiece W₂ is being subjected to the laser processing, and the three-dimensional shape data d₁ of the processed workpiece W₁ is incorporated into processing data D₃ of the next workpiece W₃ (not illustrated).

Moreover, in the embodiment, the setup and the three-dimensional shape measurement of the workpiece W is performed on the setup plate 30 separate from the processing table 20, and the workpiece W is placed on the processing table 20 and the setup plate 30 with the workpiece placing jig 60 therebetween. However, the present invention is not limited to this configuration. For example, the configuration may be as follows. The workpiece W is setup directly on the processing table 20 at the setup position, the scanning device 50 is provided near the processing table 20 at the setup position, and the three-dimensional shape measurement of the workpiece W before and after the processing thereof is performed with the workpiece W being placed directly on the processing table 20.

Moreover, although the scanning device 50 is used as the three-dimensional shape measurement device in the embodiment, the three-dimensional shape measurement device is not limited to this in the present invention. For example, a non-contact three-dimensional shape measurement device (point laser, line laser, or optical measurement device) or a contact three-dimensional shape measurement device (probe) may be used as the three-dimensional shape measurement device.

Note that the present invention can be applied also to "cutting", "boring", "welding", "cladding", "surface modification", and "surface roughness improvement" in laser processing.

### [Reference Signs List]

- 1: BED
- 2: COLUMN
- 3: CROSS RAIL
- 4: SADDLE
- 5: RAM
- 6: SAFETY COVER
- 10: LASER HEAD
- 11: LASER LIGHT EMITTING PORTION
- 20: PROCESSING TABLE
- 30: SETUP PLATE
- 40: WORKPIECE CHANGING DEVICE
- 41: MAIN BODY PORTION OF WORKPIECE CHANGING DEVICE
- 42: HOLDING PORTION OF WORKPIECE CHANGING DEVICE
- 50: SCANNING DEVICE
- 51: BASE PORTION OF SCANNING DEVICE
- 52: BODY PORTION OF SCANNING DEVICE
- 53: ARM PORTION OF SCANNING DEVICE
- 54: NECK PORTION OF SCANNING DEVICE
- 55: CAMERA OF SCANNING DEVICE
- 60: WORKPIECE PLACING JIG

## Claims

1. A three-dimensional laser processing machine which performs highly-accurate laser processing on a processing portion of a processing object by setting a focal position of laser light condensed by a condenser lens at a predetermined distance from the processing portion, **characterized in that**
the three-dimensional laser processing machine comprises a three-dimensional shape measurement device configured to measure a three-dimensional shape of the processing object, and
the focal position of the laser light in the laser processing is set at the predetermined distance from the processing portion, on the basis of three-dimensional shape data of the processing object measured by the three-dimensional shape measurement device.

2. The three-dimensional laser processing machine according to claim 1, **characterized in that**
the three-dimensional shape measurement device is installed in a setup space for the processing object, and
the three-dimensional shape of the processing object setup in the setup space is measured by the three-dimensional shape measurement device before the processing object is subjected to the laser processing.

3. The three-dimensional laser processing machine according to claim 1 or 2, **characterized in that**
the three-dimensional shape of the processing object is measured by the three-dimensional shape measurement device after the processing object is subjected to the laser processing, and
processing accuracy of the laser processing is checked by using the three-dimensional shape data of the processing object subjected to the laser processing.
